# EUROPEAN PATENT APPLICATION

(11) **EP 4 832 635 A2**
(43) Date of publication of application: **28.10.2026**
(21) Application number: 25725722.0
(22) Date of filing: 23.01.2025
(51) Int. Cl.: H04W 72/231

(54) **PROCESSING METHOD, COMMUNICATION DEVICE AND STORAGE MEDIUM**

(71) Applicant: Shenzhen Transsion Holdings Co., Ltd., Shenzhen, Guangdong 518000 (CN)
(72) Inventor: SHEN, Xingya, Shenzhen, Guangdong 518000 (CN); LI, Xin, Shenzhen, Guangdong 518000 (CN)
(74) Representative: Barker Brettell LLP
(86) International application number: PCT/CN2025/074332
(87) International publication number: WO 2025/098538

(57) **Abstract**

The present application provides a processing method, a communication device, and a storage medium. The method includes: a terminal device processes an uplink resource muting based on an indication of first information. Through the technical solution of the present application, in a SBFD gNB-to-gNB CLI scenario, processing mechanism for uplink resource muting is refined and further enhancement of uplink transmission performance is supported.

## Description

### TECHNICAL FIELD

The present application relates to the field of communication technologies and, in particular, to a processing method, a communication device, and a storage medium.

### BACKGROUND

Under existing protocols, in an SBFD (Subband Full-Duplex, Subband Full-Duplex) gNB-to-gNB CLI (gNB-to-gNBCrossLinkInterference, gNB-to-gNB Cross Link Interference) scenario, uplink resource muting (UL resource muting) can only be statically enabled or disabled via RRC (Radio Resource Control, Radio Resource Control).

During conception and implementation of the present application, the inventors have found at least the following problems. If an uplink resource muting is always statically enabled, the uplink muting resource will collide with a DMRS (Demodulation Reference Signal, Demodulation Reference Signal), and/or, the uplink resource muting will be performed where unnecessary, which leads to degradation of uplink transmission performance. Therefore, the processing mechanism for uplink resource muting in existing protocols is still imperfect.

The foregoing description is provided to give general background information and does not necessarily constitute the prior art.

### TECHNICAL SOLUTION

A main obj ective of the present application is to provide a processing method, a communication device, and a storage medium, which refine the processing mechanism for uplink resource muting in an SBFD gNB-to-gNB CLI scenario, thereby supporting enhancement of uplink transmission performance.

The present application provides a processing method, which may be applied to a terminal device (such as a mobile phone) and includes a step of:
S2, processing an uplink resource muting based on an indication of first information.

Optionally, the first information is carried in downlink control information or configured by RRC signaling, or the first information includes a first indication and/or time-domain resource allocation information.

Optionally, the step S2 includes at least one of the following:
determining to enable the uplink resource muting based on the indication of the first information;
determining to disable the uplink resource muting based on the indication of the first information.

Optionally, the method further includes at least one of the following:
the first indication being used to indicate enabling or disabling of the uplink resource muting;
the time-domain resource allocation information being used to indicate time domain resource allocation of a PUSCH;
the first indication being represented by a first parameter and/or represented by a field of the downlink control information;
the first indication being represented by a first bit in a time domain resource assignment field of the downlink control information;
the time-domain resource allocation information includes at least one of: a mapping type of a PUSCH scheduled by the downlink control information, a slot offset between the downlink control information and a scheduled PUSCH, a start symbol and a length of a PUSCH scheduled by the downlink control information.

Optionally, the method further includes at least one of the following:
the first bit being a most significant bit and/or a newly added bit in a time domain resource assignment field;
the first parameter being included in PUSCH-TimeDomainResourceAllocation;
the first parameter being included in PUSCH-TimeDomainResourceAllocation-r16;
the first parameter being included in PUSCH-Allocation-r16.

Optionally, the method further includes at least one of the following:
a value of a parameter maxNrofUL-Allocations in PUSCH-TimeDomainResourceAllocation being 32;
a value of a parameter maxNrofUL-Allocations-r16 in PUSCH-TimeDomainResourceAllocation-r16 being 128;
one PUSCH in one cell being scheduled by DCI;
multiple PUSCHs in one cell being scheduled by DCI;
multiple PUSCHs in multiple cells being scheduled by DCI, with one PUSCH scheduled per cell.

The present application further provides a processing method, which may be applied to a network device (such as a base station or a satellite) and includes a step of:
S1, transmitting first information to enable a terminal device to process an uplink resource muting based on an indication of the first information.

Optionally, the first information is carried in downlink control information or configured by RRC signaling, or the first information includes a first indication and/or time-domain resource allocation information; and/or, the terminal device processing the uplink resource muting based on the indication of the first information, includes at least one of the following:
the terminal device determining to enable the uplink resource muting based on the indication of the first information;
the terminal device determining to disable the uplink resource muting based on the indication of the first information.

Optionally, the method further includes at least one of the following:
the first indication being used to indicate enabling or disabling of the uplink resource muting;
the time-domain resource allocation information being used to indicate time domain resource allocation of a PUSCH;
the first indication being represented by a first parameter and/or represented by a field of the downlink control information;
the first indication being represented by a first bit in a time domain resource assignment field of the downlink control information;
the time-domain resource allocation information includes at least one of: a mapping type of a PUSCH scheduled by the downlink control information, a slot offset between downlink control information and a scheduled PUSCH, a start symbol and a length of a PUSCH scheduled by the downlink control information.

Optionally, the method further includes at least one of the following:
the first bit being a most significant bit and/or a newly added bit in a time-domain resource assignment field;
the first parameter being included in PUSCH-TimeDomainResourceAllocation;
the first parameter being included in PUSCH-TimeDomainResourceAllocation-r16;
the first parameter being included in PUSCH-Allocation-r16.

Optionally, the method further includes at least one of the following:
a value of a parameter maxNrofUL-Allocations in PUSCH-TimeDomainResourceAllocation being 32;
a value of a parameter maxNrofUL-Allocations-r16 in PUSCH-TimeDomainResourceAllocation-r16 being 128;
one PUSCH in one cell being scheduled by DCI;
multiple PUSCHs in one cell being scheduled by DCI;
multiple PUSCHs in multiple cells being scheduled by DCI, with one PUSCH scheduled per cell.

The present application further provides a processing apparatus, the apparatus includes:
a processing module, configured to process an uplink resource muting based on an indication of first information.

The present application further provides a processing apparatus, the apparatus includes:
a transmitting module, configured to transmit first information to enable a terminal device to process an uplink resource muting based on an indication of the first information.

The present application further provides a communication device, including: a memory, a processor and a processing program that is stored on the memory and is runnable on the processor. When the processing program is executed by the processor, the step of any one of the aforementioned processing methods is implemented.

The communication device in the present application may be a terminal device (such as a mobile phone), a network device (such as a satellite), or a chip (such as an SOC or a baseband chip with communication capability). The specific reference should be clarified based on the context.

The present application further provides a storage medium, where a computer program is stored in the storage medium, and when the computer program is executed by a processor, the steps of any one of the aforementioned processing methods are implemented.

In the technical solutions of the present application, a terminal device determines an uplink resource muting based on an indication of first information, thus refining the processing mechanism for uplink resource muting in an SBFD gNB-to-gNB CLI scenario, thereby supporting enhancement of uplink transmission performance.

### BRIEF DESCRIPTION OF THE DRAWINGS

The accompanying drawings, which are incorporated in and constitute a part of this specification, illustrate embodiments consistent with the present application and together with the description, serve to explain the principles of the present application. In order to explain the technical solutions of the embodiments of the present application more clearly, the drawings needed to be used in the description of the embodiments will be briefly introduced below. Obviously, for those of ordinary skill in the art, other drawings can be obtained based on these drawings without exerting creative efforts.
FIG. 1 is a schematic diagram of a hardware structure of a mobile terminal which implements various embodiments of the present application.
FIG. 2 is an architecture diagram of a communication network system provided by an embodiment of the present application.
FIG. 3 is a schematic diagram of a hardware structure of a controller 140 provided by the present application.
FIG. 4 is a schematic diagram of a hardware structure of a network node 150 provided by the present application.
FIG. 5 is a schematic flowchart of a processing method according to a first embodiment of the present application.
FIG. 6 is a schematic flowchart of a processing method according to a fifth embodiment of the present application.
FIG. 7 is a schematic interaction flowchart of a processing method between a network device and a terminal device according to a sixth embodiment of the present application.
FIG. 8 is a first structural diagram of a processing apparatus provided by an embodiment of the present application.
FIG. 9 is a second structural diagram of a processing apparatus provided by an embodiment of the present application.
FIG. 10 is a schematic structural diagram of a communication device provided by an embodiment of the present application.

Implementation of the obj ectives, functional features, and advantages of the present application will be further described in combination with embodiments and with reference to the accompanying drawings. Through the above drawings, explicit embodiments of the present application have been shown, and more detailed descriptions will be provided in the following. These drawings and textual descriptions are not intended to limit the scope of the concepts of the present application in any way, but to explain the concepts of the present application to those skilled in the art through reference to specific embodiments.

### DETAILED DESCRIPTION OF THE EMBODIMENTS

Exemplary embodiments will be described in detail herein, examples of which are illustrated in the accompanying drawings. When the following description refers to the drawings, unless otherwise indicated, the same numbers in different drawings refer to the same or similar elements. The implementations described in the following exemplary embodiments do not represent all implementations consistent with the present application. Rather, they are merely examples of apparatuses and methods consistent with aspects of the present application as detailed in the appended claims.

It should be noted that, herein, the terms "include", "contain", or any other variation thereof are intended to cover a non-exclusive inclusion, such that a process, method, article, or apparatus that includes a list of elements does not include only those elements but may also include other elements not expressly listed or inherent to such process, method, article, or apparatus. Without further limitation, an element defined by the phrase "include a..." does not preclude the presence of additional identical elements in the process, method, article, or apparatus that includes the element. And/or, components, features and elements with the same name in different embodiments of the present application may have the same meaning or may have different meanings. Their specific meanings need to be determined by their interpretations within the specific embodiments or in further combination with the context of that specific embodiment.

It should be understood that although the terms "first", "second", "third", etc. may be used herein to describe various information, such information should not be limited by these terms. These terms are only used to distinguish information of the same type from another. For example, without departing from the scope of the specification, first information may also be referred to as second information, and similarly, second information may also be referred to as first information. Depending on the context, the word "if" as used herein may be interpreted as "when" or "upon" or "in response to determining". Furthermore, as used herein, the singular forms "a/an", "one" and "the" are intended to include the plural forms as well, unless the context clearly indicates otherwise. It should be further understood that the terms "contain" and "include" indicate the presence of the stated features, steps, operations, elements, components, items, kinds, and/or groups, but do not preclude the presence, occurrence or addition of one or more other features, steps, operations, elements, components, items, kinds, and/or groups. Terms used in the present application such as "or", "and/or", "include at least one of the following", etc. may be interpreted as inclusive or meaning any one or any combination. For example, "include at least one of the following: A, B, C" means "any one of the following: A; B; C; A and B; A and C; B and C; A and B and C". As another example, "A, B or C" or "A, B and/or C" means "any one of the following: A; B; C; A and B; A and C; B and C; A and B and C". An exception to this definition occurs only when a combination of elements, functions, steps, or operations is inherently mutually exclusive in some manner.

It should be understood that although various steps in the flowcharts in the embodiments of the present application are shown in an order indicated by arrows, these steps are not necessarily performed in the order indicated by the arrows. Unless explicitly stated herein, the execution of these steps is not strictly limited in order and may be performed in other orders. Moreover, at least a portion of the steps in the figures may include multiple sub-steps or stages, which are not necessarily executed at the same time but may be executed at different times. Their execution order is not necessarily sequential, and they may be performed alternately or in rotation with other steps or at least a portion of sub-steps or stages of other steps.

Depending on the context, the words "if", "when" as used herein may be interpreted as "when" or "upon" or "in response to determining" or "in response to detecting". Similarly, depending on the context, the phrases "if it is determined" or "if (a stated condition or event) is detected" may be interpreted as "when it is determined" or "in response to determining" or "when (a stated condition or event) is detected" or "in response to detecting (a stated condition or event)".

It should be noted that, herein, step designations such as S1, S2, etc. are used for the purpose of describing the corresponding content more clearly and concisely, and do not constitute a substantive limitation on the order. In specific implementation, those skilled in the art may execute S2 before S1, etc., but all such variations shall fall within the protection scope of the present application.

It should be understood that the specific embodiments described herein are merely intended to explain the present application and are not intended to limit the present application.

In the following description, suffixes such as "module", "component", or "unit" used to denote elements are only for facilitating the description of the present application and have no specific meaning per se. Therefore, "module", "component", or "unit" may be used interchangeably.

The communication device in the present application may be a terminal device (such as a mobile phone), a network device (such as a base station), or a chip (such as an SOC or a baseband chip with communication capability). The specific reference should be clarified based on the context.

The terminal device may be implemented in various forms. For example, the terminal device described in the present application may include a smart terminal device such as a mobile phone, a tablet computer, a laptop, a palmtop computer, a personal digital assistant (Personal Digital Assistant, PDA), a portable media player (Portable Media Player, PMP), a navigation apparatus, a wearable device, a smart bracelet, a pedometer, etc., as well as a fixed terminal device such as a digital TV, a desktop computer, etc.

In the following description, a mobile terminal will be used as an example for illustration. Those skilled in the art will understand that the configurations according to the embodiments of the present application can also be applied to a fixed terminal device, except for an element specifically for mobile purposes.

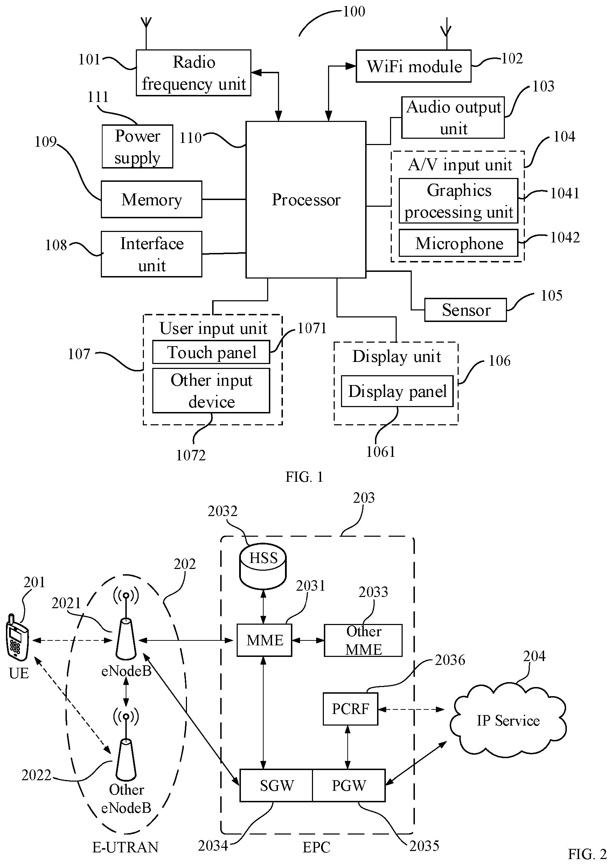

Please refer to FIG. 1, which is a schematic diagram of a hardware structure of a mobile terminal which implements various embodiments of the present application. The mobile terminal 100 may include: an RF (Radio Frequency, Radio frequency) unit 101, a WiFi module 102, an audio output unit 103, an A/V (audio/video) input unit 104, a sensor 105, a display unit 106, a user input unit 107, an interface unit 108, a memory 109, a processor 110, a power supply 111, and other components. Those skilled in the art will understand that the structure of the mobile terminal shown in FIG. 1 does not constitute a limitation on the mobile terminal. The mobile terminal may include more or fewer components than illustrated, combine some components, or have different component arrangements.

The components of the mobile terminal will be described in detail with reference to FIG. 1.

The radio frequency unit 101 may be configured to receive and transmit signals during information or call communication. Specifically, after receiving downlink information from a base station, the radio frequency unit 101 passes the same to the processor 110 for processing. Additionally, the radio frequency unit 101 transmits uplink data to the base station. Generally, the radio frequency unit 101 includes, but is not limited to, an antenna, at least one amplifier, a transceiver, a coupler, a low noise amplifier, a duplexer, etc. And/or, the radio frequency unit 101 may also communicate with a network and other devices via wireless communication. The aforementioned wireless communication may use any communication standard or protocol, including but not limited to GSM (Global System of Mobile Communication, Global System for Mobile Communication), GPRS (General Packet Radio Service, General Packet Radio Service), CDMA2000 (Code Division Multiple Access 2000, Code Division Multiple Access 2000), WCDMA (Wideband Code Division Multiple Access, Wideband Code Division Multiple Access), TD-SCDMA (Time Division-Synchronous Code Division Multiple Access, Time Division-Synchronous Code Division Multiple Access), FDD-LTE (Frequency Division Duplexing-Long Term Evolution, Frequency Division Duplexing-Long Term Evolution), TDD-LTE (Time Division Duplexing-Long Term Evolution, Time Division Duplexing-Long Term Evolution), 5G, and 6G, etc.

WiFi is a short-range wireless transmission technology. Through the WiFi module 102, the mobile terminal can help users send and receive emails, browse web pages, and access streaming media, etc., providing users with wireless broadband Internet access. Although FIG. 1 shows the WiFi module 102, it should be understood that it is not an essential component of the mobile terminal and may be omitted as needed without changing the essence of the invention.

The audio output unit 103 may convert audio data, received by the radio frequency unit 101 or the WiFi module 102, or stored in the memory 109, into audio signals and output them as sound when the mobile terminal 100 is in a call signal reception mode, a call mode, a recording mode, a voice recognition mode, a broadcast reception mode, etc. Moreover, the audio output unit 103 may also provide audio output related to specific functions performed by the mobile terminal 100 (for example, call signal reception sound, message reception sound, etc.). The audio output unit 103 may include a speaker, a buzzer, etc.

The A/V input unit 104 is configured to receive audio or video signals. The A/V input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The processed image frame may be displayed on the display unit 106. The image frame processed by the graphics processing unit 1041 may be stored in the memory 109 (or other storage medium) or transmitted via the radio frequency unit 101 or the WiFi module 102. The microphone 1042 may receive sound (audio data) via the microphone 1042 in operation modes such as a telephone call mode, a recording mode, a voice recognition mode, etc., and can process such sound into audio data. The processed audio (voice) data may be converted into a format that can be transmitted to a mobile communication base station via the radio frequency unit 101 and output in the case of a telephone call mode. The microphone 1042 may implement various types of noise cancellation (or suppression) algorithms to cancel (or suppress) noise or interference generated during receiving and transmitting audio signals.

The mobile terminal 100 further includes at least one type of sensor 105, such as a light sensor, a motion sensor, and other sensors. Optionally, the light sensor includes an ambient light sensor and a proximity sensor. Optionally, the ambient light sensor may adjust the brightness of the display panel 1061 according to the brightness of ambient light. The proximity sensor may turn off the display panel 1061 and/or backlight when the mobile terminal 100 is moved to the ear. As a type of a motion sensor, an accelerometer sensor can detect the magnitude of acceleration in various directions (generally three axes). When it is stationary, it can detect the magnitude and direction of gravity, and can be used for applications recognizing the posture of the mobile phone (such as screen orientation switching, related games, magnetometer posture calibration), vibration recognition related functions (such as pedometer, tapping), etc. As for other sensors that may be configured on the mobile phone, such as a fingerprint sensor, a pressure sensor, an iris sensor, a molecular sensor, a gyroscope, a barometer, a hygrometer, a thermometer, an infrared sensor, etc., they will not be detailed here.

The display unit 106 is configured to display information input by the user or information provided to the user. The display unit 106 may include a display panel 1061, which may be configured using a liquid crystal display (Liquid Crystal Display, LCD), an organic light-emitting diode (Organic Light-Emitting Diode, OLED), or other forms.

The user input unit 107 may be configured to receive input numeric or character information and generate key signal inputs related to user settings and functional control of the mobile terminal. Optionally, the user input unit 107 may include a touch panel 1071 and other input devices 1072. The touch panel 1071, also known as a touch screen, may collect touch operations of the user on or near it (for example, operations performed by a user using a finger, stylus, or any suitable object or accessory on or near the touch panel 1071) and drive corresponding connection apparatuses according to preset programs. The touch panel 1071 may include two parts: a touch detection apparatus and a touch controller. Optionally, the touch detection apparatus detects the user's touch orientation and detects signals brought by the touch operation, then transmits the signals to the touch controller. The touch controller receives touch information from the touch detection apparatus, converts it into contact coordinates, and transmits them to the processor 110, and can also receive and execute commands from the processor 110. And/or, the touch panel 1071 may be implemented in various types such as resistive, capacitive, infrared, and surface acoustic wave. In addition to the touch panel 1071, the user input unit 107 may also include other input devices 1072. Optionally, the other input devices 1072 may include, but are not limited to, one or more of a physical keyboard, a function key (such as a volume control button, a switch button, etc.), a trackball, a mouse, a joystick, etc., which is not specifically limited here.

Optionally, the touch panel 1071 may cover the display panel 1061. When the touch panel 1071 detects a touch operation on or near it, it transmits the information to the processor 110 to determine the type of touch event. Then, the processor 110 provides corresponding visual output on the display panel 1061 according to the type of touch event. Although the touch panel 1071 and the display panel 1061 are implemented as two independent components to realize the input and output functions of the mobile terminal in FIG. 1, in some embodiments, the touch panel 1071 and the display panel 1061 may be integrated to realize the input and output functions of the mobile terminal, which is not specifically limited here.

The interface unit 108 serves as an interface through which at least one external apparatus can connect to the mobile terminal 100. For example, the external apparatus may include a wired or wireless headphone port, an external power supply (or battery charger) port, a wired or wireless data port, a memory card port, a port for connecting an apparatus with an identification module, an audio input/output (I/O) port, a video I/O port, an earphone port, etc. The interface unit 108 may be configured to receive input (for example, data information, power, etc.) from the external apparatus and transmit the received input to one or more elements within the mobile terminal 100, or may be configured to transmit data between the mobile terminal 100 and the external apparatus.

The memory 109 may be configured to store a software program and various data. The memory 109 may mainly include a program storage area and a data storage area. Optionally, the program storage area may store an operating system, application programs required for at least one function (such as sound playback function, image playback function, etc.), etc. The data storage area may store data created according to the use of the mobile phone (such as audio data, phonebook, etc.). And/or, the memory 109 may include a high-speed random access memory and may also include a non-volatile memory, for example, at least one magnetic disk storage device, flash memory device, or other volatile solid-state storage devices.

The processor 110 is a control center of the mobile terminal, connecting various parts of the entire mobile terminal through various interfaces and lines. By running or executing software programs and/or modules stored in the memory 109 and calling data stored in the memory 109, it performs various functions of the mobile terminal and processes data, thereby monitoring the mobile terminal as a whole. The processor 110 may include one or more processing units. Preferably, the processor 110 may integrate an application processor and a modem processor. Optionally, the application processor mainly handles the operating system, the user interface, and the application programs, etc., while the modem processor mainly handles wireless communication. It is understood that the aforementioned modem processor may also not be integrated into the processor 110.

The mobile terminal 100 may further include a power supply 111 (such as a battery) that supplies power to various components. Preferably, the power supply 111 may be logically connected to the processor 110 through a power management system, thereby implementing functions such as charging management, discharging management, and power consumption management through the power management system.

Although not shown in FIG. 1, the mobile terminal 100 may further include a Bluetooth module, etc., which will not be detailed here.

For the convenience of understanding the embodiments of the present application, a communication network system on which the mobile terminal of the present application is based is described below.

Please refer to FIG. 2, FIG. 2 is an architecture diagram of a communication network system provided by an embodiment of the present application. The communication network system is an NR (New Radio, New Radio) system of universal mobile communication technology. The NR system includes a UE (User Equipment, User Equipment) 201, an E-UTRAN (Evolved UMTS Terrestrial Radio Access Network, Evolved UMTS Terrestrial Radio Access Network) 202, an EPC (Evolved Packet Core, Evolved Packet Core) 203, and an operator's IP service 204, which are sequentially connected in communication.

Optionally, the UE 201 may be the aforementioned terminal device 100, which will not be detailed here.

The E-UTRAN 202 includes an eNodeB 2021 and other eNodeB 2022, etc. Optionally, the eNodeB 2021 may be connected to other eNodeB 2022 via a backhaul (backhaul) (such as an X2 interface). The eNodeB 2021 is connected to the EPC 203 and may provide the UE 201 with access to the EPC 203.

The EPC 203 may include an MME (Mobility Management Entity, Mobility Management Entity) 2031, an HSS (Home Subscriber Server, Home Subscriber Server) 2032, other MME 2033, an SGW (Serving Gate Way, Serving Gate Way) 2034, a PGW (PDN Gate Way, Packet Data Network Gate Way) 2035, and a PCRF (Policy and Charging Rules Function, Policy and Charging Rules Function) 2036, etc. Optionally, the MME 2031 is a control node that handles signaling between the UE 201 and the EPC 203, providing bearer and connection management. The HSS 2032 is configured to provide some registers to manage functions such as a home location register (not shown in the figure) and store some user-specific information such as service features, data rates, etc. All user data can be sent via the SGW 2034. The PGW 2035 may provide IP address allocation for the UE 201 and other functions. The PCRF 2036 is a policy and charging control policy decision point for service data flows and IP bearer resources. It selects and provides available policy and charging control decisions for the policy and charging enforcement function unit (not shown in the figure).

The IP service 204 may include Internet, intranet, IMS (IP Multimedia Subsystem, IP Multimedia Subsystem) or other IP services.

Although the LTE system is taken as an example for introduction in the above, those skilled in the art should understand that the present application is not only applicable to the LTE system, but also to other wireless communication systems, such as a GSM, a CDMA2000, a WCDMA, a TD-SCDMA, 5G, and a future new network system (such as 6G), etc., which are not limited here.

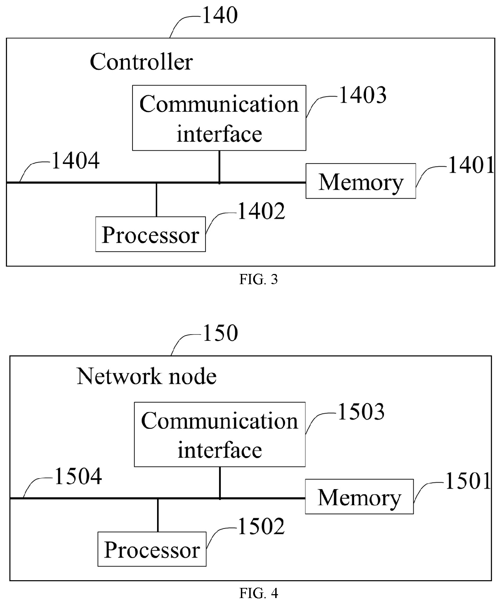

FIG. 3 is a schematic diagram of a hardware structure of a controller 140 provided by the present application. The controller 140 includes: a memory 1401 and a processor 1402. The memory 1401 is configured to store program instructions, and the processor 1402 is configured to call the program instructions in the memory 1401 to execute the steps performed by the controller in the first method embodiment. The implementation principles and beneficial effects are similar and will not be detailed here.

Optionally, the aforementioned controller further includes a communication interface 1403, which may be connected to the processor 1402 via a bus 1404. The processor 1402 may control the communication interface 1403 to implement the receiving and transmitting functions of the controller 140.

FIG. 4 is a schematic diagram of a hardware structure of a network node 150 provided by the present application. The network node 150 includes: a memory 1501 and a processor 1502. The memory 1501 is configured to store program instructions, and the processor 1502 is configured to call the program instructions in the memory 1501 to execute the steps performed by the first node in the first method embodiment. The implementation principles and beneficial effects therebetween are similar and will not be detailed here.

Optionally, the aforementioned controller further includes a communication interface 1503, which may be connected to the processor 1502 via a bus 1504. The processor 1502 may control the communication interface 1503 to implement the receiving and transmitting functions of the network node 150.

The integrated modules implemented in the form of software functional modules as described above may be stored in a computer-readable storage medium. The software functional modules are stored in a storage medium, which includes several instructions to enable a computer device (which may be a personal computer, a server, a network device, etc.) or a processor (English: processor) to perform some steps of the methods in various embodiments of the present application.

The embodiments may be implemented entirely or partially through software, hardware, firmware, or any combination thereof. When implemented in software, the embodiment may be entirely or partially embodied as a computer program product. The computer program product includes one or more computer instructions. When loaded and executed on a computer, the computer program instructions entirely or partially generate the processes or functions according to the embodiments of the present application. The computer may be a general-purpose computer, a special-purpose computer, a computer network, or other programmable apparatuses. The computer instructions may be stored in a storage medium or transmitted from one storage medium to another storage medium. For example, the computer instructions may be transmitted from a website site, a computer, a server, or a data center to another website site, computer, server, or data center via wired means (for example, coaxial cable, optical fiber, digital subscriber line (DSL)) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid-state disk, solid-state disk, SSD), etc.

Various embodiments of the present application are proposed based on the hardware structure of the aforementioned mobile terminal and the communication network system.

Technical terms involved in the present embodiments:
PDSCH: Physical Downlink Shared CHannel, Physical Downlink Shared Channel;
PDCCH: Physical Downlink Control CHannel, Physical Downlink Control Channel;
UL resource muting: Uplink resource muting, Uplink resource muting;
PRB: Physical Resource Block, Physical Resource Block;
SBFD: SubBand Full-Duplex, SubBand Full-Duplex.

### First Embodiment

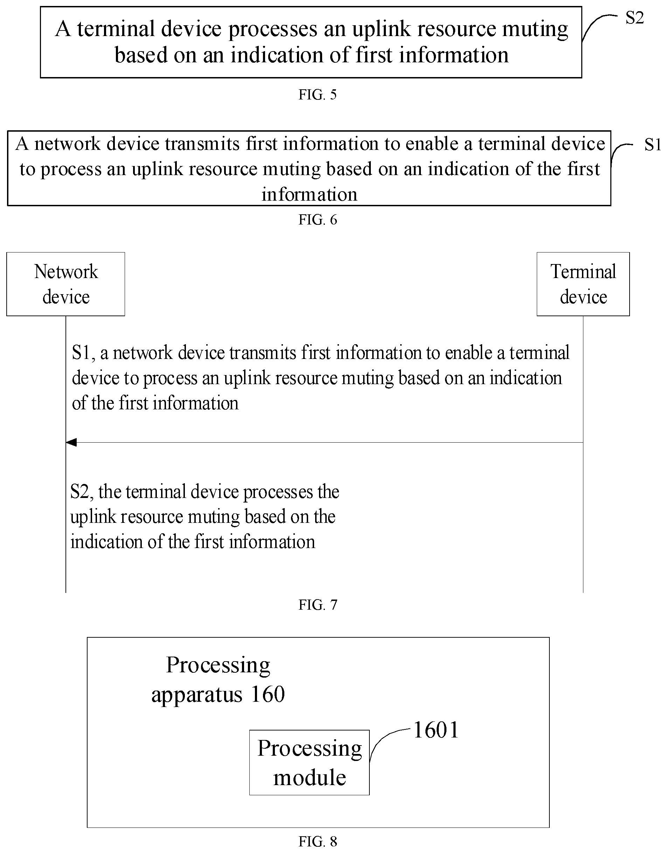

Referring to FIG. 5, FIG. 5 is a schematic flowchart of a processing method according to the first embodiment. The processing method of this embodiment of the present application may be applied to a terminal device (such as a mobile phone), and include a step of:

S2, a terminal device processes an uplink resource muting based on an indication of first information.

This embodiment considers that under existing protocols, in an SBFD (Subband Full-Duplex) gNB-to-gNB CLI (gNB-to-gNB Cross Link Interference) scenario, uplink resource muting can only be statically enabled or disabled via RRC (Radio Resource Control). However, if an uplink resource muting is always statically enabled, the uplink muting resource will collide with a DMRS (Demodulation Reference Signal), and/or, the uplink resource muting will be performed where unnecessary, which leads to degradation of uplink transmission performance.

Therefore, this embodiment proposes a technical solution in which a terminal device processes an uplink resource muting based on an indication of first information, thus refining the processing mechanism for uplink resource muting in an SBFD gNB-to-gNB CLI scenario, thereby supporting enhancement of uplink transmission performance.

Optionally, the first information is provided by a network device.

Optionally, the network device may be a base station, a satellite, or the like.

Optionally, the first information is carried in downlink control information.

Optionally, the first information is configured by RRC signaling.

Optionally, the terminal device determines the uplink resource muting based on an indication of the first information.

Optionally, the terminal device determining or processing the uplink resource muting based on the indication of the first information includes at least one of the following:
the terminal device determining to enable the uplink resource muting based on the indication of the first information;
the terminal device determining to disable the uplink resource muting based on the indication of the first information.

Therefore, the terminal device determines to enable and/or disable the uplink resource muting based on the indication of the first information, thus refining the processing mechanism for uplink resource muting in the SBFD gNB-to-gNB CLI scenario, achieving dynamic enabling or disabling of uplink resource muting, and thereby supporting enhancement of uplink transmission performance.

Optionally, the first information includes a first indication and/or time-domain resource allocation information.

Optionally, the first indication is used to indicate enabling or disabling of the uplink resource muting.

Optionally, the first indication is represented by a first parameter.

Optionally, the first parameter is included in PUSCH-TimeDomainResourceAllocation.

Optionally, the first parameter is included in PUSCH-TimeDomainResource Allocation-r16.

Optionally, the first parameter is included in PUSCH-Allocation-r16.

Optionally, a value of a parameter maxNrofUL-Allocations in PUSCH-TimeDomainResourceAllocation is 32.

Optionally, a value of a parameter maxNrofUL-Allocations-r16 in PUSCH-TimeDomainResourceAllocation-r16 is 128.

Optionally, the first indication is represented by a field of downlink control information.

Optionally, the first indication is represented by a first bit in a time domain resource assignment field of downlink control information.

Optionally, the first bit is a most significant bit and/or a newly added bit in the time domain resource assignment field.

Optionally, the time-domain resource allocation information is used to indicate time domain resource allocation of a PUSCH.

Optionally, the time-domain resource allocation information includes at least one of: a mapping type of a PUSCH scheduled by downlink control information, a slot offset between the downlink control information and a scheduled PUSCH, a start symbol and a length of the PUSCH scheduled by the downlink control information.

Optionally, one PUSCH in one cell is scheduled by the downlink control information (DCI).

Optionally, multiple PUSCHs in one cell are scheduled by the downlink control information.

Optionally, multiple PUSCHs in multiple cells are scheduled by the downlink control information, with one PUSCH scheduled per cell.

Through the technical solution of this embodiment, the terminal device determines the uplink resource muting based on the indication of the first information, thus refining the processing mechanism for uplink resource muting in the SBFD gNB-to-gNB CLI scenario, thereby supporting enhancement of uplink transmission performance.

### Second Embodiment

Based on the first embodiment of the present application, this embodiment further describes the method for the terminal device to process the uplink resource muting based on the indication of the first information in combination a scenario.

This embodiment proposes a technical solution in which a terminal device processes an uplink resource muting based on an indication of first information, thus refining the processing mechanism for uplink resource muting in an SBFD gNB-to-gNB CLI scenario, thereby supporting enhancement of uplink transmission performance.

Optionally, the first information is provided by a network device.

Optionally, the network device may be a base station, a satellite, or the like.

Optionally, the first information is carried in downlink control information.

Optionally, the first information is configured by RRC signaling.

Optionally, the terminal device determines the uplink resource muting based on an indication of the first information.

Optionally, the terminal device determines to enable the uplink resource muting based on the indication of the first information;

Optionally, the terminal device determines to disable the uplink resource muting based on the indication of the first information.

Optionally, the first information includes a first indication and/or time-domain resource allocation information.

Optionally, the first indication is used to indicate enabling or disabling of the uplink resource muting.

Optionally, the first indication is represented by a first parameter.

Optionally, the time-domain resource allocation information is used to indicate time domain resource allocation of a PUSCH.

Optionally, the time-domain resource allocation information includes at least one of: a mapping type of a PUSCH scheduled by downlink control information, a slot offset between the downlink control information and a scheduled PUSCH, a start symbol and a length of the PUSCH scheduled by the downlink control information.

Optionally, one PUSCH in one cell is scheduled by the DCI (downlink control information).

Optionally, multiple cells are scheduled by one DCI, with one PUSCH scheduled per cell.

Optionally, a Time Domain Resource Assignment (TDRA, Time Domain Resource Assignment) field in a DCI (DCI formats 0_0, 0_1, 0_2) that schedules an uplink data channel PUSCH is used to indicate a row of a time-domain resource allocation table.

Optionally, the time-domain resource allocation table may be configured via RRC common signaling or UE-specific signaling.

Optionally, a default time-domain resource allocation table is adopted for initial access or when no time-domain resource allocation table is configured.

Optionally, a row of the time-domain resource allocation table includes information of the mapping type of the PUSCH scheduled by the DCI, the slot offset between the DCI and the scheduled PUSCH, the start symbol position S and the length (that is, a duration at symbol level) L of the PUSCH scheduled by the DCI, thereby determining a position of the PUSCH time domain resource indicated by the DCI.

Optionally, mapping types A and B are also commonly referred to as slot-based scheduling, and mini-slot (mini slot)-based or non-slot-based (non slot based) or symbol-based scheduling, respectively.

Optionally, the time-domain resource allocation table configured by RRC signaling is shown in Table 1. Optionally, the start symbol position S and the length L are jointly determined by a value of SLIV (Start and Length Indicator Value, Start and Length Indicator Value) indicated by startSymbolAndLength.

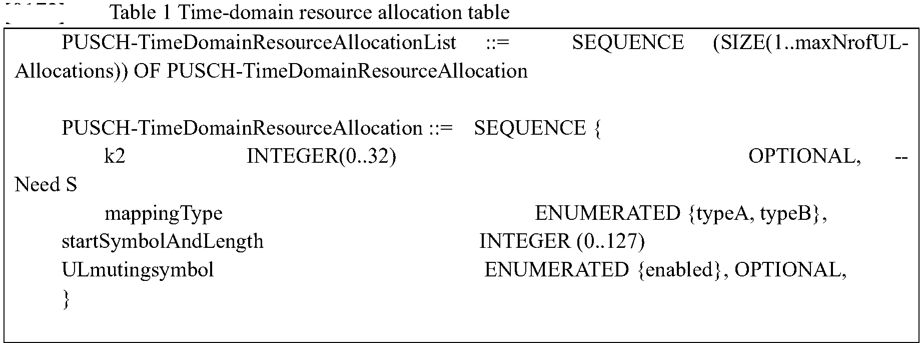

Optionally, a first parameter is added in PUSCH-TimeDomainResourceAllocation, where the first parameter (ULmutingsymbol) is used to indicate whether uplink muting is enabled in the currently scheduled PUSCH.

For example, if the first parameter indicates that uplink muting is enabled, uplink muting is applied, according to a configured uplink muting pattern, on the currently scheduled PUSCH. And/or, if it indicates that uplink muting is disabled or this parameter is absent, uplink resource muting is not applied on the currently scheduled PUSCH.

Optionally, the parameter maxNrofUL-Allocations is increased to 32. This ensures that, PUSCH-TimeDomainResourceAllocation still has 16 entries without the first parameter.

Optionally, the uplink muting pattern is configured by RRC signaling.

Optionally, the uplink muting pattern is configured or activated by MAC CE signaling.

Optionally, a time domain of the uplink muting pattern is a symbol index.

Optionally, the symbol index includes one or both of symbol index 1 and symbol index 2.

Optionally, a frequency domain of the uplink muting pattern is a raster. Optionally, the raster means that there is one muting resource element in every two resource elements or every four resource elements.

Through the technical solution of this embodiment, the terminal device determines the uplink resource muting based on the indication of the first information. For example, the first parameter is added in PUSCH-TimeDomainResourceAllocation to indicate whether uplink muting is applied to the currently scheduled PUSCH, thus refining the processing mechanism for uplink resource muting in the SBFD gNB-to-gNB CLI scenario, clearly indicating how to achieve dynamic enabling or disabling of uplink resource muting, thereby supporting enhancement of uplink transmission performance.

### Third Embodiment

Based on any one of the above embodiments of the present application, this embodiment further describes the method for the terminal device to process the uplink resource muting based on the indication of the first information in combination a scenario.

This embodiment proposes a technical solution in which a terminal device processes an uplink resource muting based on an indication of first information, thus refining the processing mechanism for uplink resource muting in an SBFD gNB-to-gNB CLI scenario, thereby supporting enhancement of uplink transmission performance.

Optionally, the first information is provided by a network device.

Optionally, the network device may be a base station, a satellite, or the like.

Optionally, the first information is carried in downlink control information.

Optionally, the first information is configured by RRC signaling.

Optionally, the terminal device determines the uplink resource muting based on an indication of the first information.

Optionally, the terminal device determines to enable the uplink resource muting based on the indication of the first information;

Optionally, the terminal device determines to disable the uplink resource muting based on the indication of the first information.

Optionally, the first information includes a first indication and/or time-domain resource allocation information.

Optionally, the first indication is used to indicate enabling or disabling of the uplink resource muting.

Optionally, the first indication is represented by a first parameter.

Optionally, the time-domain resource allocation information is used to indicate time domain resource allocation of a PUSCH.

Optionally, the time-domain resource allocation information includes at least one of: a mapping type of a PUSCH scheduled by downlink control information, a slot offset between the downlink control information and the scheduled PUSCH, a start symbol and a length of the PUSCH scheduled by the downlink control information.

Optionally, one PUSCH in one cell is scheduled by the downlink control information (DCI).

Optionally, in DCI format 0_1 scheduling PUSCHs, the Time Domain Resource Assignment field indicates a row of a table pusch-TimeDomainAllocationListForMultiPUSCH configured by RRC.

Optionally, the time-domain resource allocation table configured by RRC is shown in Table 2. Optionally, each row contains time-domain resource allocation information for up to 8 PUSCHs.

Optionally, the time-domain resource allocation information for each PUSCH includes information of the mapping type of the PUSCH scheduled by the DCI, the start symbol position S and the length L of the PUSCH scheduled by the DCI, thereby determining a position of the PUSCH time domain resource indicated by the DCI.

Optionally, mapping types A and B are also commonly referred to as slot-based scheduling, and mini-slot-based or non-slot-based or symbol-based scheduling, respectively.

Optionally, the time-domain resource allocation table configured by RRC signaling is shown in Table 2. Optionally, the start symbol position S and the length L are jointly determined by a value of SLIV indicated by startSymbolAndLength.

Optionally, a first parameter is added in PUSCH-TimeDomainResourceAllocation-r16, where the first parameter (ULmutingsymbol) is used to indicate whether uplink muting is enabled in the currently scheduled PUSCH.

For example, if the first parameter indicates that uplink muting is enabled, the terminal device performs, according to a configured uplink muting pattern, uplink muting on the currently scheduled PUSCH. And/or, if it indicates that uplink muting is disabled, it is not required for the terminal device to perform uplink muting on the currently scheduled PUSCH.

Optionally, the parameter maxNrofUL-Allocations-r16 is increased to 128. This ensures that, PUSCH-TimeDomainResourceAllocation-r16 still has 16 entries without the first parameter.

For example, if the first parameter indicates that uplink muting is enabled, the terminal device performs, according to a configured uplink muting pattern, uplink muting on the currently scheduled PUSCH. And/or, if it indicates that uplink muting is disabled or this parameter is absent, UL resource muting is not applied for the corresponding PUSCH transmission.

Optionally, if the first parameter indicates that uplink muting is enabled, the terminal device performs, according to the configured uplink muting pattern, uplink muting on all PUSCHs scheduled by the current DCI. And/or, if it indicates that uplink muting is disabled or this parameter is absent, it is not required for the terminal device to perform uplink muting on all PUSCHs scheduled by the current DCI.

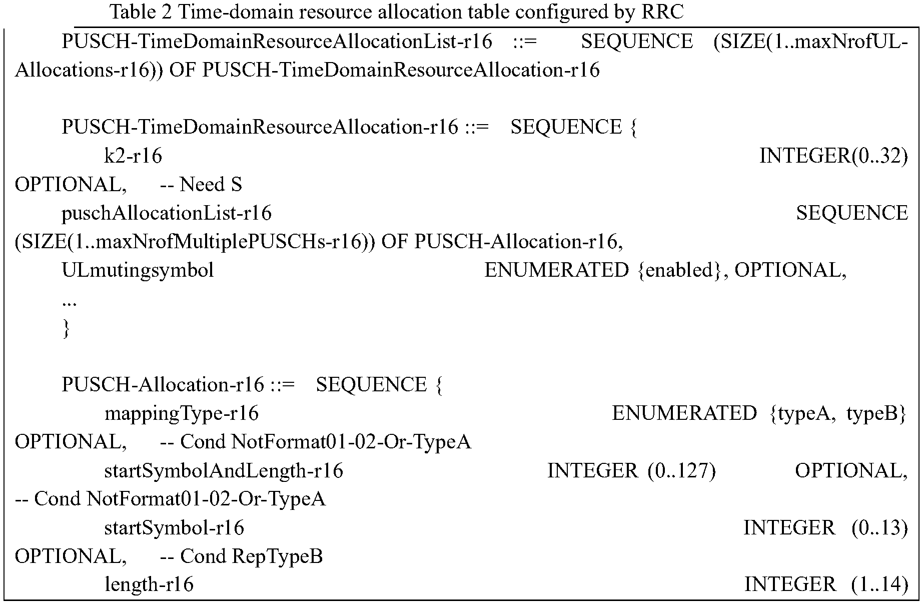

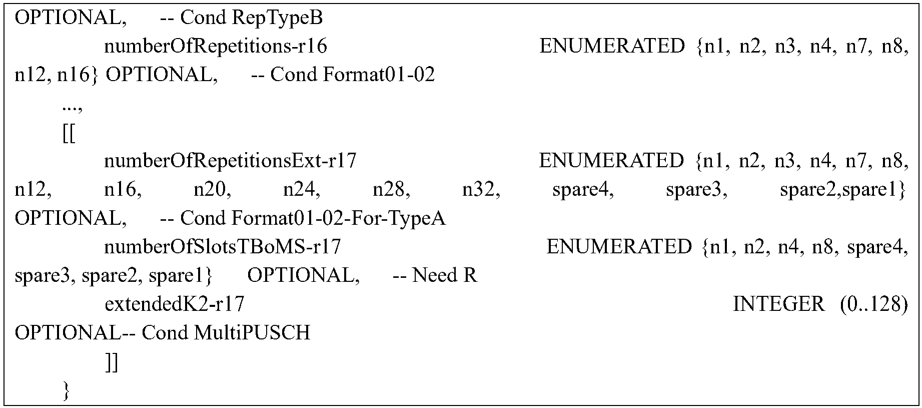

Optionally, the uplink muting pattern is configured by RRC signaling.

Optionally, the uplink muting pattern is configured or activated by MAC CE signaling.

Optionally, a time domain of the uplink muting pattern is a symbol index.

Optionally, the symbol index includes one or both of symbol index 1 and symbol index 2.

Optionally, a frequency domain of the uplink muting pattern is a raster. Optionally, the raster means that there is one muting resource element in every two resource elements or every four resource elements.

Optionally, a first parameter is added in PUSCH-Allocation-r16, where the first parameter (ULmutingsymbol) is used to indicate whether uplink muting is enabled in the currently scheduled PUSCH.

For example, if the first parameter indicates that uplink muting is enabled, the terminal device performs, according to the uplink muting pattern configured in the time-domain resource allocation table configured by RRC as shown in Table 3, uplink muting on the PUSCH scheduled by the current DCI. And/or, if it indicates that UL muting is disabled or this parameter is not configured, it is not required for the terminal device to perform uplink muting on the currently scheduled PUSCH.

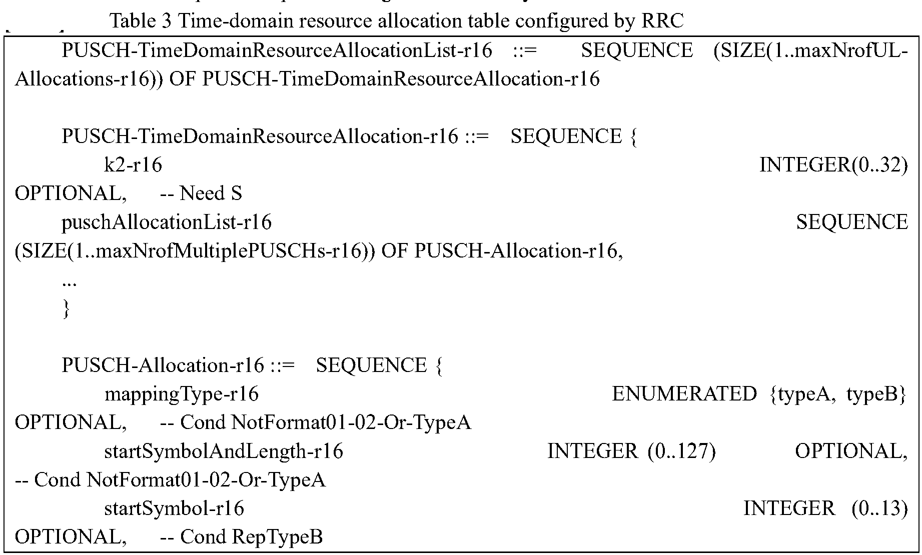

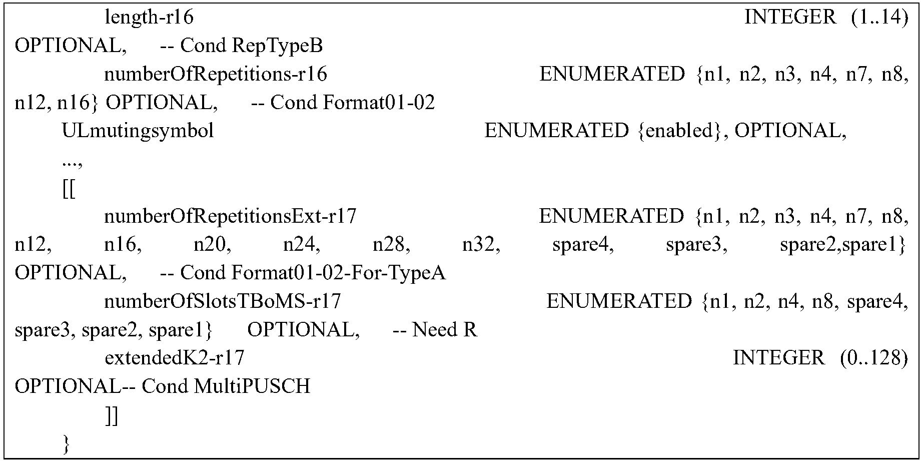

Through the technical solution of this embodiment, the terminal device determines the uplink resource muting based on the indication of the first information. For example, the first parameter is added in PUSCH-TimeDomainResourceAllocation-r16 to indicate whether uplink muting is enabled in the currently scheduled PUSCH, thus refining the processing mechanism for uplink resource muting in the SBFD gNB-to-gNB CLI scenario, clearly indicating how to achieve dynamic enabling or disabling of uplink resource muting, thereby supporting enhancement of uplink transmission performance.

### Fourth Embodiment

Based on any one of the above embodiments of the present application, this embodiment further describes the method for the terminal device to process the uplink resource muting based on the indication of the first information in combination a scenario.

This embodiment proposes a technical solution in which a terminal device processes an uplink resource muting based on an indication of first information, thus refining the processing mechanism for uplink resource muting in an SBFD gNB-to-gNB CLI scenario, thereby supporting enhancement of uplink transmission performance.

Optionally, the first information is provided by a network device.

Optionally, the network device may be a base station, a satellite, or the like.

Optionally, the first information is carried in downlink control information.

Optionally, the first information is configured by RRC signaling.

Optionally, the terminal device determines the uplink resource muting based on an indication of the first information.

Optionally, the terminal device determines to enable the uplink resource muting based on the indication of the first information;

Optionally, the terminal device determines to disable the uplink resource muting based on the indication of the first information.

Optionally, the first information includes a first indication and/or time-domain resource allocation information.

Optionally, the first indication is used to indicate enabling or disabling of the uplink resource muting.

Optionally, the first indication is represented by a field of downlink control information.

Optionally, the first indication is represented by a first bit in a time domain resource assignment field of downlink control information.

Optionally, the first bit is a most significant bit and/or a newly added bit in the time domain resource assignment field.

Optionally, the time-domain resource allocation information is used to indicate time domain resource allocation of a PUSCH.

Optionally, the time-domain resource allocation information includes at least one of: a mapping type of a PUSCH scheduled by downlink control information, a slot offset between the downlink control information and the scheduled PUSCH, a start symbol and a length of the PUSCH scheduled by the downlink control information.

Optionally, the downlink control information schedules multiple PUSCHs in multiple cells, with one PUSCH scheduled per cell.

Optionally, a Time Domain Resource Assignment field in a DCI (formats 0_0, 0_1, 0_2) scheduling an uplink data channel PUSCH is used to indicate a row of a time-domain resource allocation table.

Optionally, the time-domain resource allocation table may be configured via RRC common signaling or UE-specific signaling.

Optionally, a default time-domain resource allocation table is adopted for initial access or when no time-domain resource allocation table is configured.

Optionally, a row of the time-domain resource allocation table includes information of the mapping type of the PUSCH scheduled by the DCI, the slot offset between the DCI and the scheduled PUSCH, the start symbol position S and a length L of the PUSCH scheduled by the DCI, thereby determining a position of the PUSCH time domain resource indicated by the DCI.

Optionally, mapping types A and B are also commonly referred to as slot-based scheduling, and mini-slot-based or non-slot-based or symbol-based scheduling, respectively. Optionally, the time-domain resource allocation table configured by RRC signaling is shown in Table 1. Optionally, the start symbol position S and the length L are jointly determined by a value of SLIV indicated by startSymbolAndLength.

Optionally, 1 bit in the Time Domain Resource Assignment field in a DCI (formats 0_0, 0_1, 0_2) is used to indicate whether uplink muting is enabled in the currently scheduled PUSCH.

For example, if the TDRA field in the DCI indicates that uplink muting is enabled, uplink muting is applied, according to a configured uplink muting pattern, to the currently scheduled PUSCH. And/or, if the TDRA field in the DCI indicates that uplink muting is disabled or this field is absent, uplink muting is not applied for the currently scheduled PUSCH.

Optionally, the 1 bit is the most significant bit of the TDRA field.

Optionally, other bits in the Time Domain Resource Assignment filed other than the most significant bit are used to indicate time domain information for scheduling the PUSCH.

Optionally, the 1 bit is the least significant bit of the Time Domain Resource Assignment field.

Optionally, other bits in the Time Domain Resource Assignment field other than the least significant bit are used to indicate time domain information for scheduling the PUSCH.

Optionally, the 1 bit is a newly added 1 bit.

Optionally, if the 1 bit is a newly added 1 bit, the Time Domain Resource Assignment field has $1 + {log}_{2} \left⌈{I}_{TDRA}\right⌉$ bits, where *I_{TDRA}* is the number of rows of the time-domain resource allocation table configured by RRC common signaling or UE-specific signaling.

Optionally, the terminal device determines to enable or disable the uplink muting according to a SLIV value and a threshold value.

Optionally, if the SLIV value is less than a first threshold, the terminal device enables uplink muting.

Optionally, if the SLIV value is greater than or equal to the first threshold, the terminal device disables uplink muting.

Optionally, if the SLIV value is greater than a second threshold, the terminal device enables uplink muting.

Optionally, if the SLIV value is less than or equal to the second threshold, the terminal device disables uplink muting.

Optionally, a value of the first threshold and/or the second threshold is configured by RRC signaling.

Optionally, the SLIV value is configured by RRC signaling. Optionally, the SLIV value is indicated by the Time Domain Resource Assignment field in the DCI.

Optionally, the uplink muting pattern is configured by RRC signaling.

Optionally, the uplink muting pattern is configured or activated by MAC CE signaling.

Optionally, a time domain of the uplink muting pattern is symbol index.

Optionally, the symbol index includes one or both of symbol index 1 and symbol index 2.

Optionally, a frequency domain of the uplink muting pattern is a raster. Optionally, the raster means that there is one muting resource element in every two resource elements or every four resource elements.

Through the technical solution of this embodiment, the terminal device determines the uplink resource muting based on the indication of the first information. 1 bit in the Time Domain Resource Assignment field in the DCI (formats 0_0, 0_1, 0_2) is used to indicate whether uplink muting is applied in the currently scheduled PUSCH, thus refining the processing mechanism for uplink resource muting in the SBFD gNB-to-gNB CLI scenario, clearly indicating how to achieve dynamic enabling or disabling of uplink resource muting, thereby supporting enhancement of uplink transmission performance.

### Fifth Embodiment

Referring to FIG. 6, FIG. 6 is a schematic flowchart of a processing method according to a fifth embodiment of the present application. The processing method of the embodiment of the present application may be applied to a network device (such as a base station), including a step of:

S1, a network device transmits first information to enable a terminal device to process an uplink resource muting based on an indication of the first information.

This embodiment proposes a technical solution that refines the processing mechanism for uplink resource muting, thereby supporting enhancement of uplink transmission performance.

Optionally, the first information is provided by a network device.

Optionally, the network device may be a base station, a satellite, or the like.

Optionally, the first information is carried in downlink control information.

Optionally, the first information is configured by RRC signaling.

Optionally, the terminal device determines the uplink resource muting based on an indication of the first information.

Optionally, the terminal device determining or processing the uplink resource muting based on the indication of the first information includes at least one of the following:
the terminal device determining to enable the uplink resource muting based on the indication of the first information;
the terminal device determining to disable the uplink resource muting based on the indication of the first information.

Therefore, the terminal device determines to enable and/or disable the uplink resource muting based on the indication of the first information, thus refining the processing mechanism for uplink resource muting in the SBFD gNB-to-gNB CLI scenario, achieving dynamic enabling or disabling of uplink resource muting, and thereby supporting enhancement of uplink transmission performance.

Optionally, the first information includes a first indication and/or time-domain resource allocation information.

Optionally, the first indication is used to indicate enabling or disabling of the uplink resource muting.

Optionally, the first indication is represented by a first parameter.

Optionally, the first parameter is included in PUSCH-TimeDomainResourceAllocation.

Optionally, the first parameter is included in PUSCH-TimeDomainResource Allocation-r16.

Optionally, the first parameter is included in PUSCH-Allocation-r16.

Optionally, a value of a parameter maxNrofUL-Allocations in PUSCH-TimeDomainResourceAllocation is 32.

Optionally, a value of a parameter maxNrofUL-Allocations-r16 in PUSCH-TimeDomainResourceAllocation-r16 is 128.

Optionally, the first indication is represented by a field of downlink control information.

Optionally, the first indication is represented by a first bit in a time domain resource assignment field of downlink control information.

Optionally, the first bit is a most significant bit and/or a newly added bit in the time domain resource assignment field.

Optionally, the time-domain resource allocation information is used to indicate time domain resource allocation of a PUSCH.

Optionally, the time-domain resource allocation information includes at least one of: a mapping type of a PUSCH scheduled by downlink control information, a slot offset between the downlink control information and the scheduled PUSCH, a start symbol and a length of the PUSCH scheduled by the downlink control information.

Optionally, one PUSCH in one cell is scheduled by the downlink control information (DCI).

Optionally, multiple PUSCHs in one cell are scheduled by the downlink control information.

Optionally, multiple PUSCHs in multiple cells are scheduled by the downlink control information, with one PUSCH scheduled per cell.

Through the technical solution of this embodiment, the network device transmits the first information to enable the terminal device to determine the uplink resource muting based on the indication of the first information, thus refining the processing mechanism for uplink resource muting in the SBFD gNB-to-gNB CLI scenario, thereby supporting enhancement of uplink transmission performance.

### Sixth Embodiment

Referring to FIG. 7, FIG. 7 is a schematic interaction flowchart of a processing method between a network device and a terminal device according to a sixth embodiment. The sixth embodiment of the present application provides a processing method, including steps of:
S1, a network device transmits first information to enable a terminal device to process an uplink resource muting based on an indication of the first information;
S2, the terminal device determines the uplink resource muting based on the indication of the first information.

This embodiment proposes a technical solution in which a terminal device processes an uplink resource muting based on an indication of first information, thus refining the processing mechanism for uplink resource muting in an SBFD gNB-to-gNB CLI scenario, thereby supporting enhancement of uplink transmission performance.

Optionally, the first information is provided by a network device.

Optionally, the network device may be a base station, a satellite, or the like.

Optionally, the first information is carried in downlink control information.

Optionally, the first information is configured by RRC signaling.

Optionally, the terminal device determines the uplink resource muting based on an indication of the first information.

Optionally, the terminal device determining or processing the uplink resource muting based on the indication of the first information includes at least one of the following:
the terminal device determining to enable the uplink resource muting based on the indication of the first information;
the terminal device determining to disable the uplink resource muting based on the indication of the first information.

Therefore, the terminal device determines to enable and/or disable the uplink resource muting based on the indication of the first information, thus refining the processing mechanism for uplink resource muting in the SBFD gNB-to-gNB CLI scenario, achieving dynamic enabling or disabling of uplink resource muting, and thereby supporting enhancement of uplink transmission performance.

Optionally, the first information includes a first indication and/or time-domain resource allocation information.

Optionally, the first indication is used to indicate enabling or disabling of the uplink resource muting.

Optionally, the first indication is represented by a first parameter.

Optionally, the first parameter is included in PUSCH-TimeDomainResourceAllocation.

Optionally, the first parameter is included in PUSCH-TimeDomainResource Allocation-r16.

Optionally, the first parameter is included in PUSCH-Allocation-r16.

Optionally, a value of a parameter maxNrofUL-Allocations in PUSCH-TimeDomainResourceAllocation is 32.

Optionally, a value of a parameter maxNrofUL-Allocations-r16 in PUSCH-TimeDomainResourceAllocation-r16 is 128.

Optionally, the first indication is represented by a field of downlink control information.

Optionally, the first indication is represented by a first bit in a time-domain resource assignment field of downlink control information.

Optionally, the first bit is a most significant bit and/or a newly added bit in the time-domain resource assignment field.

Optionally, the time-domain resource allocation information is used to indicate time domain resource allocation of a PUSCH.

Optionally, the time-domain resource allocation information includes at least one of: a mapping type of a PUSCH scheduled by downlink control information, a slot offset between the downlink control information and the scheduled PUSCH, a start symbol and a length of the PUSCH scheduled by the downlink control information.

Optionally, one PUSCH in one cell is scheduled by the downlink control information (DCI).

Optionally, multiple PUSCHs in one cell are scheduled by the downlink control information.

Optionally, multiple PUSCHs in multiple cells are scheduled by the downlink control information, with one PUSCH scheduled per cell.

Through the technical solution of this embodiment, the terminal device determines the uplink resource muting based on the indication of the first information, thus refining the processing mechanism for uplink resource muting in the SBFD gNB-to-gNB CLI scenario, thereby supporting enhancement of uplink transmission performance.

### Seventh Embodiment

Referring to FIG. 8, FIG. 8 is a first structural diagram of a processing apparatus provided by an embodiment of the present application. The apparatus may be mounted on or be the terminal device in the above method embodiments. As shown in FIG. 8, the processing apparatus 160 includes:
a processing module 1601, configured to process an uplink resource muting based on an indication of first information.

Optionally, the first information is carried in downlink control information or configured by RRC signaling, or includes a first indication and/or time-domain resource allocation information.

Optionally, the processing the uplink resource muting based on the indication of the first information, includes at least one of the following:
determining to enable the uplink resource muting based on the indication of the first information;
determining to disable the uplink resource muting based on the indication of the first information.

Optionally, the apparatus further includes at least one of the following:
the first indication being used to indicate enabling or disabling of the uplink resource muting;
the time-domain resource allocation information being used to indicate time domain resource allocation of a PUSCH;
the first indication being represented by a first parameter and/or represented by a field of downlink control information;
the first indication being represented by a first bit in a time-domain resource assignment field of downlink control information;
the time-domain resource allocation information includes at least one of: a mapping type of a PUSCH scheduled by downlink control information, a slot offset between downlink control information and the scheduled PUSCH, a start symbol and a length of a PUSCH scheduled by downlink control information.

Optionally, the apparatus further includes at least one of the following:
a first bit being a most significant bit and/or a newly added bit in a time-domain resource assignment field;
the first parameter being included in PUSCH-TimeDomainResourceAllocation;
the first parameter being included in PUSCH-TimeDomainResourceAllocation-r16;
the first parameter being included in PUSCH-Allocation-r16.

Optionally, the apparatus further includes at least one of the following:
a value of a parameter maxNrofUL-Allocations in PUSCH-TimeDomainResourceAllocation being 32;
a value of a parameter maxNrofUL-Allocations-r16 in PUSCH-TimeDomainResourceAllocation-r16 being 128;
one PUSCH in one cell being scheduled by DCI;
multiple PUSCHs in one cell being scheduled by DCI;
multiple PUSCHs in multiple cells being scheduled by DCI, with one PUSCH scheduled per cell.

The processing apparatus provided in the embodiment of the present application corresponds to the technical solutions shown in the corresponding method embodiments above, the implementation principles and beneficial effects therebetween are similar, and will not be repeated here.

### Eighth Embodiment

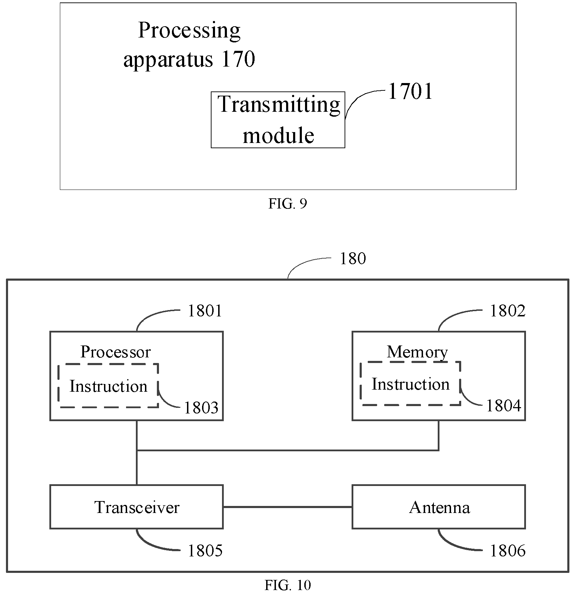

Referring to FIG. 9, FIG. 9 is a second structural diagram of a processing apparatus provided by an embodiment of the present application. The apparatus may be mounted on or be the network device in the above method embodiments. As shown in FIG. 9, the apparatus 170 includes:
a transmitting module 1701, configured to transmit first information to enable a terminal device to process an uplink resource muting based on an indication of the first information.

Optionally, the first information is carried in downlink control information or configured by RRC signaling, or includes a first indication and/or time-domain resource allocation information.

Optionally, the terminal device processing the uplink resource muting based on the indication of the first information, includes at least one of the following:
the terminal device determining to enable the uplink resource muting based on the indication of the first information;
the terminal device determining to disable the uplink resource muting based on the indication of the first information.

Optionally, the apparatus further includes at least one of the following:
the first indication being used to indicate enabling or disabling of the uplink resource muting;
the time-domain resource allocation information being used to indicate time domain resource allocation of a PUSCH;
the first indication being represented by a first parameter and/or represented by a field of downlink control information;
the first indication being represented by a first bit in a time-domain resource assignment field of downlink control information;
the time-domain resource allocation information includes at least one of: a mapping type of a PUSCH scheduled by downlink control information, a slot offset between downlink control information and the scheduled PUSCH, a start symbol and a length of a PUSCH scheduled by downlink control information.

Optionally, the apparatus further includes at least one of the following:
a first bit being a most significant bit and/or a newly added bit in a time-domain resource assignment field;
a first parameter being included in PUSCH-TimeDomainResourceAllocation;
a first parameter being included in PUSCH-TimeDomainResourceAllocation-r16;
a first parameter being included in PUSCH-Allocation-r16.

Optionally, the apparatus further includes at least one of the following:
a value of a parameter maxNrofUL-Allocations in PUSCH-TimeDomainResourceAllocation being 32;
a value of a parameter maxNrofUL-Allocations-r16 in PUSCH-TimeDomainResourceAllocation-r16 being 128;
one PUSCH in one cell being scheduled by DCI;
multiple PUSCHs in one cell being scheduled by DCI;
multiple PUSCHs in multiple cells being scheduled by DCI, with one PUSCH scheduled per cell.

The processing apparatus provided in the embodiment of the present application corresponds to the technical solutions shown in the corresponding method embodiments above, the implementation principles and beneficial effects therebetween are similar, and will not be repeated here.

Referring to FIG. 10, FIG. 10 is a schematic structural diagram of a communication device provided by an embodiment of the present application. As shown in FIG. 10, the communication device 180 described in this embodiment may be the terminal device (or a component applicable to the terminal device) or the network device (or a component applicable to the network device) mentioned in the previous method embodiments. The communication device 180 can be configured to implement the methods corresponding to the terminal device or network device described in the above method embodiments, and details can be found in the description of the above method embodiments.

The communication device 180 may include one or more processors 1801, which may also be referred to as processing units, and are capable of implementing certain control or processing functions. The processor 1801 may be a general-purpose processor or a dedicated processor, etc. For example, it may be a baseband processor or a central processing unit. The baseband processor may be used to process communication protocols and communication data. The central processing unit may be used to control the communication device, execute software programs, and process data in the software programs.

Optionally, the processor 1801 may also store instructions 1803 or data (such as intermediate data). Optionally, the instructions 1803 may be executed by the processor 1801, enabling the communication device 180 to perform the methods corresponding to the terminal device or network device described in the aforementioned method embodiments.

Optionally, the communication device 180 may include a circuit that can implement the functions of transmitting, receiving, or communicating described in the aforementioned method embodiments.

Optionally, the communication device 180 may include one or more memories 1802 on which the instructions 1804 may be stored. The instructions may be executed on the processor 1801, enabling the communication device 180 to perform the methods described in the aforementioned method embodiments.

Optionally, data may also be stored in the memory 1802. The processor 1801 and the memory 1802 may be set separately or integrated together.

Optionally, the communication device 180 may further include a transceiver 1805 and/or an antenna 1806. The processor 1801 may be referred to as a processing unit, and controls the communication device 180 (a terminal device, a core network device, or a wireless access network device). The transceiver 1805 may be referred to as a transceiver unit, a transceiver, a transceiver circuit, or the like, configured to implement the transmitting and receiving functions of the communication device 180.

Optionally, if the communication device 180 is configured to implement the operations corresponding to the terminal device in the above embodiments, for example, the transceiver 1805 may receive first information, and the processor 1801 may process an uplink resource muting based on an indication of the first information.

Optionally, the specific implementation process of the processor 1801 and the transceiver 1805 can be found in in the relevant descriptions of the above embodiments and will not be repeated here.

Optionally, if the communication device 180 is configured to implement the operations corresponding to the network device in the above embodiments, for example, the transceiver 1805 may transmit first information.

Optionally, the specific implementation process of the processor 1801 and the transceiver 1805 can be found in in the relevant descriptions of the above embodiments and will not be repeated here.

The processor 1801 and the transceiver 1805 described in the present application can be implemented on an IC (Integrated Circuit, Integrated Circuit), analog integrated circuit, RFIC (Radio Frequency Integrated Circuit, Radio Frequency Integrated Circuit), mixed-signal integrated circuit, ASIC (Application Specific Integrated Circuit, Application Specific Integrated Circuit), PCB (Printed Circuit Board, Printed Circuit Board), electronic device, etc. The processor 1801 and the transceiver 1805 can also be manufactured using various integrated circuit process technologies, for example, a CMOS (Complementary Metal-Oxide Semiconductor, Complementary Metal-Oxide Semiconductor), an NMOS (N Metal-Oxide Semiconductor, N Metal-Oxide Semiconductor), a PMOS (Positive channel Metal Oxide Semiconductor, Positive channel Metal Oxide Semiconductor), a BJT (Bipolar Junction Transistor, Bipolar Junction Transistor), a Bipolar CMOS (BiCMOS), Silicon Germanium (SiGe), Gallium Arsenide (GaAs), etc.

The communication device in the present application may be a terminal device (such as a mobile phone) or a network device (such as a base station). The specific reference should be clarified based on the context. The terminal device may be implemented in various forms. For example, the terminal device described in the present application may include a terminal device such as a mobile phone, a tablet computer, a laptop, a palmtop computer, a personal digital assistant (Personal Digital Assistant, PDA), a portable media player (Portable Media Player, PMP), a navigation apparatus, a wearable device, a smart bracelet, a pedometer, etc., as well as a fixed terminal device such as a digital TV, a desktop computer, etc.

Although in the descriptions of the above embodiments, the communication device is described as a terminal device or network device, the scope of the communication device described in the present application is not limited to the above terminal device or network device, and the structure of the communication device may not be limited by FIG. 10. The communication device may be an independent device or may be part of a larger device.

An embodiment of the present application further provides a communication system, including: the terminal device according to any one of the aforementioned embodiments, and, the network device according to any one of the aforementioned embodiments.

An embodiment of the present application further provides a communication device, including a memory, a processor, and a processing program stored on the memory. When the processing program is executed by the processor, the steps of the processing method according to any one of the above embodiments are implemented.

The communication device in the present application may be a terminal device (such as a mobile phone), a network device (such as a satellite), or a chip (such as an SOC or a baseband chip with communication capability). The specific reference should be clarified based on the context.

An embodiment of the present application further provides a computer-readable storage medium with a processing program stored thereon, and when the processing program is executed by a processor, the steps of the processing method according to any one of the above embodiments are implemented.

The embodiments of the communication device and storage medium provided by the embodiments of the present application may include all the technical features of any embodiment of the aforementioned processing method. The description expansion and explanation content are basically the same as those of the various embodiments of the above method and will not be repeated here.

An embodiment of the present application further provides a computer program product which includes computer program code. When the computer program code is run on a computer, the computer is enabled to execute the method according to any one of the various possible implementations described above.

An embodiment of the present application further provides a chip, including a memory and a processor. The memory is used to store a computer program, and the processor is used to invoke and run the computer program in the memory, enabling a device on which the chip is installed to execute the method according to any one of the various possible implementations described above.

It is understood that the above scenarios are only examples and do not constitute limitations on the application scenarios of the technical solutions provided by the embodiments of the present application. The technical solutions of the present application can also be applied to other scenarios. For example, those skilled in the art can understand that with the evolution of system architecture and the emergence of new business scenarios, the technical solutions provided by the embodiments of the present application are equally applicable to similar technical problems.

The sequence numbers of the above embodiments of the present application are for description only and do not represent the superiority or inferiority of the embodiments.

The steps in the method embodiments of the present application can be adjusted in order, merged, and deleted according to actual requirements.

The units in the device embodiments of the present application can be merged, divided, and deleted according to actual requirements.

In the present application, for descriptions of identical or similar term concepts, technical solutions, and/or application scenarios, detailed descriptions are generally provided only upon first occurrence. When they appear again later, they are generally not repeated for brevity. When understanding the technical solutions and other content of the present application, for identical or similar term concepts, technical solutions, and/or application scenario descriptions that are not described in detail later, reference can be made to their previous relevant detailed descriptions.

In the present application, the descriptions of the various embodiments each have their own emphasis. For parts not described or recorded in detail in a certain embodiment, reference can be made to the relevant descriptions of other embodiments.

The technical features of the technical solutions of the present application can be combined arbitrarily. To keep the description concise, not all possible combinations of the various technical features in the above embodiments have been described. However, as long as there is no contradiction in the combination of these technical features, they should be considered as falling within the scope recorded in the present application.

Through the description of the above implementations, those skilled in the art can clearly understand that the methods in the above embodiments can be implemented by means of software plus a necessary general hardware platform, and of course, can also be implemented by hardware. In many cases, the former is a better implementation. Based on this understanding, the technical solution of the present application in essence or the part contributing to the prior art can be embodied in the form of a software product. The computer software product is stored in a storage medium as above (for example, ROM/RAM, magnetic disk, optical disc), including several instructions for causing a terminal device (which may be a mobile phone, a computer, a server, a controlled terminal device, or a network device, etc.) to execute the method of each embodiment of the present application.

In the aforementioned embodiments, implementation may be entirely or partially through software, hardware, firmware, or a combination thereof. When implemented in software, it may be entirely or partially embodied as a computer program product. The computer program product includes one or more computer instructions. When loaded and executed on a computer, the computer program instructions entirely or partially generate the processes or functions according to the embodiments of the present application. The computer may be a general-purpose computer, a special-purpose computer, a computer network, or other programmable apparatuses. The computer instructions may be stored in a storage medium or transmitted from one storage medium to another storage medium. For example, the computer instructions may be transmitted from a website site, a computer, a server, or a data center to another website site, computer, server, or data center via wired means (for example, coaxial cable, optical fiber, digital subscriber line) or wireless means (for example, infrared, wireless, microwave, etc.). The storage medium may be any available medium that a computer can access or a data storage device such as a server, a data center, etc., that integrates one or more available media. The available medium may be a magnetic medium (for example, a floppy disk, a hard disk, a magnetic tape), an optical medium (for example, a DVD), or a semiconductor medium (for example, a solid state disk, Solid State Disk (SSD)), etc.

The above descriptions are only preferred embodiments of the present application and do not limit the patent scope of the present application. Any equivalent structure or equivalent process transformation made using the content of the description and drawings of the present application, or any direct or indirect application to other related technical fields, shall similarly be included within the scope of patent protection of the present application.

## Claims

1. A processing method, applied to a terminal device, comprising a step of:
S2, processing an uplink resource muting based on an indication of first information.

2. The method according to claim 1, wherein the first information is carried in downlink control information or configured by RRC signaling, or the first information comprises a first indication and/or time-domain resource allocation information; and/or, the step S2 comprises at least one of the following:
determining to enable the uplink resource muting based on the indication of the first information;
determining to disable the uplink resource muting based on the indication of the first information.

3. The method according to claim 2, further comprising at least one of the following:
the first indication being used to indicate enabling or disabling of the uplink resource muting;
the time-domain resource allocation information being used to indicate time domain resource allocation of a PUSCH;
the first indication being represented by a first parameter and/or represented by a field of the downlink control information;
the first indication being represented by a first bit in a time domain resource assignment field of the downlink control information;
the time-domain resource allocation information comprises at least one of: a mapping type of a PUSCH scheduled by the downlink control information, a slot offset between the downlink control information and
a scheduled PUSCH, a start symbol and a length of a PUSCH scheduled by the downlink control information.

4. The method according to claim 3, further comprising at least one of the following:
the first bit being a most significant bit and/or a newly added bit in the time domain resource assignment field;
the first parameter being included in PUSCH-TimeDomainResourceAllocation;
the first parameter being included in PUSCH-TimeDomainResourceAllocation-r16;
the first parameter being included in PUSCH-Allocation-r16.

5. The method according to claim 4, further comprising at least one of the following:
a value of a parameter maxNrofUL-Allocations in PUSCH-TimeDomainResourceAllocation being 32;
a value of a parameter maxNrofUL-Allocations-r16 in PUSCH-TimeDomainResourceAllocation-r16 being 128;
one PUSCH in one cell being scheduled by theDCI;
multiple PUSCHs in one cell being scheduled by the DCI;
multiple PUSCHs in multiple cells being scheduled by the DCI, with one PUSCH scheduled per cell.

6. A processing method, applied to a network device, comprising a step of:
S1, transmitting first information to enable a terminal device to process an uplink resource muting based on an indication of the first information.

7. The method according to claim 6, wherein the first information is carried in downlink control information or configured by RRC signaling, or the first information comprises a first indication and/or time-domain resource allocation information; and/or, the terminal device processing the uplink resource muting based on the indication of the first information, comprises at least one of the following:
the terminal device determining to enable the uplink resource muting based on the indication of the first information;
the terminal device determining to disable the uplink resource muting based on the indication of the first information.

8. The method according to claim 7, further comprising at least one of the following:
the first indication being used to indicate enabling or disabling of the uplink resource muting;
the time-domain resource allocation information being used to indicate time domain resource allocation of a PUSCH;
the first indication being represented by a first parameter and/or represented by a field of the downlink control information;
the first indication being represented by a first bit in a time domain resource assignment field of the downlink control information;
the time-domain resource allocation information comprises at least one of: a mapping type of a PUSCH scheduled by the downlink control information, a slot offset between the downlink control information and a scheduled PUSCH, a start symbol and a length of a PUSCH scheduled by the downlink control information.

9. The method according to claim 8, further comprising at least one of the following:
the first bit being a most significant bit and/or a newly added bit in the time domain resource assignment field;
the first parameter being included in PUSCH-TimeDomainResourceAllocation;
the first parameter being included in PUSCH-TimeDomainResourceAllocation-r16;
the first parameter being included in PUSCH-Allocation-r16.

10. The method according to claim 9, further comprising at least one of the following:
a value of a parameter maxNrofUL-Allocations in PUSCH-TimeDomainResourceAllocation being 32;
a value of a parameter maxNrofUL-Allocations-r16 in PUSCH-TimeDomainResourceAllocation-r16 being 128;
one PUSCH in one cell being scheduled by the DCI;
multiple PUSCHs in one cell being scheduled by the DCI;
multiple PUSCHs in multiple cells being scheduled by the DCI, with one PUSCH scheduled per cell.

11. A communication device, comprising: a memory, a processor, and a processing program that is stored on the memory, and when the processing program is executed by the processor, the step of the processing method according to claim 1 or claim 6 is implemented.

12. A computer-readable storage medium, wherein a computer program is stored in the computer-readable storage medium, and when the computer program is executed by a processor, the step of the processing method according to claim 1 or claim 6 is implemented.
